# FASCICULE DE BREVET EUROPEEN

(11) **EP 2 424 821 B1**
(45) Date de publication et mention de la délivrance du brevet: **01.05.2013**
(21) Numéro de dépôt: 10714960.1
(22) Date de dépôt: 23.03.2010
(51) Int. Cl.: C02F 5/10, C11D 3/37, C02F 103/08

(54) **UTILISATION D'HOMOPOLYMERES DE L'ACIDE MALEIQUE ET DE SES SELS COMME AGENTS INHIBITEURS DE TARTRE ET ANTI-ADHERENCE**
VERWENDUNG VON MALEINSÄUREHOMOPOLYMEREN UND SALZEN DAVON ALS SCALEINHIBITOREN UND ANTIHAFTMITTEL
USE OF MALEIC ACID HOMOPOLYMERS AND SALTS THEREOF AS SCALE-INHIBITING AND ANTI-ADHESION AGENTS

(30) Priorité: 27.04.2009 FR 0952720
(43) Date de publication de la demande: 07.03.2012
(73) Titulaire: Coatex S.a.S, 69730 Genay (FR)
(72) Inventeur: KENSICHER, Yves, F-69620 Theize (FR); SUAU, Jean-Marc, F-69480 Lucenay (FR)
(74) Mandataire: Fiorucci, Hélène
(86) Numéro de dépôt international: PCT/IB2010/000682
(87) Numéro de publication internationale: WO 2010/125434

(56) Documents cités:
- EP-A- 0 819 704

## Description

Les phénomènes d'entartrage désignent l'action des sels minéraux contenus dans l'eau qui, sous l'effet de la température et en fonction de leur concentration dans le milieu, vont précipiter sous forme de dépôts, plus ou moins durs et susceptibles d'adhérer aux parois. De tels dépôts sont gênants à plus d'un titre (amplification des phénomènes de bio films et corrosion différentielle) mais surtout d'un point de vue énergétique et thermique sur le rendement des procédés industriels, conduisant parfois à l'arrêt total d'une installation en vue de nettoyer celle-ci et de changer certaines pièces endommagées par le tartre.

Les tartres les plus communément rencontrés sont ceux à base de carbonate de calcium et de magnésium. On connaît depuis de nombreuses années un certain nombre d'additifs dont la fonction première est d'empêcher la précipitation des sels minéraux et de réduire ainsi la formation de tartre. Il en existe deux familles distinctes et très représentées dans la littérature : celle des phosphonates, et celle des polymères carboxyliques hydrosolubles de faible masse moléculaire en poids (inférieure à 5 000 g/mole, tels que déterminés par Chromatographie en Phase Gel ou GPC). Dans toute la suite de la Demande, on fera référence à des masses moléculaires en poids.

Les phosphonates agissent par blocage des mécanismes de croissance cristalline, comme décrit dans le document "Mecanisms of scale inhibition by phosphonates" (Proceedings, International Water Conference, Engineering Society of Western Pennsylvania (1983), 44th, 26-34). Ces produits sont largement décrits dans la littérature, comme l'attestent les documents EP 1 392 610, EP 1 392 609, EP 1 351 889, EP 1 152 986, US 5 772 893, US 5 298 221, US 5 221 487 sans que cette liste soit pour autant exhaustive.

Parmi eux, il en existe une catégorie bien connue de l'homme du métier à base d'acides organophosphoniques, tels que notamment l'HEDP ou acide 1-hydroxy ethylidene-1,1-diphosphonique (C₂H₈O₇P₂). Son efficacité comme agent réducteur de tartre a fait l'objet de nombreuses études : on pourra citer à titre d'exemples les documents "Research on the anti-scaling ability of ATMP and HEDP using quantum chemistry method" (Huagong Shikan (2008), 22(2), pp. 1-5), "Study of corrosion inhibitors PBTCA, HEDP and ATMP" (Cailiao Kexue Yu Gongyi (2006), 14(6), pp. 608-611) "Study of the scale inhibition by HEDP in a channel flow cell using a quartz crystal microbalance" (Electrochimica Acta (2001), 46(7), pp. 973-985) "Behavior of the organic phosphonates HEDP and PBTA as corrosion inhibitors of carbon steel in aqueous media" (Revista Iberoamericana de Corrosion y Proteccion (1990), 21(5), pp. 187-91).

Cependant, les phosphonates présentent deux inconvénients majeurs. Le premier est d'ordre environnemental, puisque le phosphore est responsable de l'eutrophisation des eaux des lacs et des rivières, c'est-à-dire de leur "asphyxie" : cette dernière est due à un apport exagéré de substances nutritives qui augmentent la production d'algues et de plantes aquatiques, lesquelles consomment un excédent d'oxygène. Le second est d'ordre économique, le phosphore étant aujourd'hui une ressource naturelle limitée : son prix de marché est très dépendant des demandes saisonnières en certains sous-produits comme les phosphates dans le domaine des engrais. Il est donc important de limiter autant que possible la dose de phosphore employé.

La seconde famille d'agents anti-tartre bien connue de l'homme du métier est celle des polymères carboxyliques de bas poids moléculaires, en général inférieurs à 5 000 g/mol, tels que déterminés par GPC. Les plus répandus sont les homopolymères et copolymères à base d'acide acrylique et d'acide maléique. Ils sont obtenus par polymérisation des monomères dans l'eau ou dans un solvant organique approprié, en présence d'une source de radicaux libres. Il existe un très grand nombre de procédés de synthèse correspondants.

A titre d'exemples, on pourra citer les documents EP 0 058 073, EP 0 108 909, EP 0 441 022, EP 0 491 301, EP 0 561 722, EP 0 569 73 1, EP 0 818 423, US 5 175 361, US 5 244 988, US 5 360 570. Ces documents diffèrent à travers le choix entre les acides acrylique et maléique comme constituant de base, entre un homopolymère et un copolymère (et alors entre les différents comonomères possibles), entre les conditions de synthèse telles que le milieu réactionnel, la source de radicaux libres, la température, etc...

Or, qu'il s'agisse d'acides organophosphoniques ou de polymères carboxyliques de bas poids moléculaires, ces produits ne donnent pas aujourd'hui entière satisfaction. En effet, outre leur capacité à éviter la formation de tartre, c'est aussi leur aptitude à empêcher l'adhésion de celui-ci sur les parois qui est recherchée par l'homme du métier. La première de ces propriétés est mesurée à travers la masse de précipité formé en présence du polymère testé, dans une eau ayant une composition particulière en sels ; la seconde est évaluée à travers la masse de précipité qui adhère ensuite aux parois.

Poursuivant ses recherches en vue de mettre en évidence un polymère offrant un optimum au niveau de ces propriétés, la Demanderesse a alors démontré que les polymères de l'art antérieur n'étaient pas satisfaisants : alors qu'ils étaient présentés comme des agents anti-tartre efficaces dans les documents précités, ils n'offraient pas des performances aussi intéressantes au niveau de la propriété d'anti-adhérence.

De plus, la Demanderesse a su identifier parmi un très grand nombre de polymères déjà décrits dans la littérature, une classe tout à fait particulière pour résoudre son problème : celle des homopolymères de l'acide maléique obtenus par un procédé particulier mettant en oeuvre comme catalyseur un système à base d'eau oxygénée et d'hypophosphite de sodium, procédé qui sera explicité par la suite.

Le pouvoir inhibiteur de précipitation de ces polymères apparaît alors plus élevé que celui d'homopolymères et de copolymères de l'acide acrylique et de l'acide maléique obtenus avec d'autres systèmes catalytiques. On montre même que selon une variante particulière de l'invention, on arrive à un pouvoir anti-tartre du même ordre de grandeur que celui de l'HEDP, mais on améliore remarquablement le pouvoir anti-adhérence par rapport à celui de l'HEDP. En d'autres termes, cette dernière variante permet d'accéder à un compromis anti-tartre et anti-adhérence encore jamais égalé.

Aussi, la présente invention consiste-t-elle en l'utilisation, comme agent anti-tartre et anti-adhérence, d'homopolymères issus de la polymérisation de l'acide maléique, en présence d'un système catalytique mettant en oeuvre de l'eau oxygénée et de l'hypophosphite de sodium, le ratio molaire hypophosphite de sodium / acide maléique étant compris entre 0,2 et 1, préférentiellement entre 0,35 - 0,6.

Un tel procédé était en partie divulgué dans le document EP 0 819 704 B1, mais avec un ratio molaire entre un composé contenant du phosphore d'une part, et un composé qui est le monomère à polymériser d'autre part, compris entre 0,005 et 0,49 : ce ratio est donc différent de celui de l'invention.

En outre, les deux inventions ne se « recouvrent pas » : un tel recouvrement supposerait en effet que les deux inventions visent d'abord des fonctions identiques pour les produits concernés, avant d'examiner si ces produits présentent des zones de recouvrement au niveau de leur constitution chimique. Or, ceci n'est pas le cas : on revendique ici l'utilisation de certains polymères comme agents ayant la double fonction anti-tartre et anti-adhérence, ce qui n'est pas divulgué dans le document EP 0 819 704 BI.

De plus, rien ne suggérait dans le document EP 0 819 704 B1 de se focaliser sur des homopolymères de l'acide maléique, plutôt que sur des copolymères de cet acide, ou sur des homopolymères ou copolymères de l'acide acrylique qui sont tous revendiqués et exemplifiés dans ce document. Enfin, il n'existait aucune incitation dans ce document ni même ailleurs, en vue de sélectionner la plage préférentielle 0,35 - 0,6 pour le ratio molaire hypophosphite de sodium / acide maléique, afin d'obtenir le meilleur compromis entre inhibition du tartre et action anti-adhérence.

Il est important de souligner qu'un tel résultat est obtenu pour une proportion massique de phosphore bien moindre que dans l'HEDP. Si le phosphore compte pour 30 % de la masse de l'HEDP, il représente au plus 14 % de la masse des polymères selon l'invention (cas où le ratio molaire hypophosphite de sodium / acide maléique = 1). Cette proportion massique est remarquablement diminuée et comprise entre 7,1 % et 10,4 % pour la variante préférentielle de l'invention.

Aussi, un premier objet de l'invention réside dans l'utilisation, comme agent ayant la double fonction anti-tartre et anti-adhérence, d'homopolymères caractérisés en ce qu'ils sont issus d'un procédé de polymérisation de l'acide maléique mettant en oeuvre comme système catalytique de l'eau oxygénée et de l'hypophosphite de sodium, où le ratio molaire hypophosphite de sodium / acide maléique est compris entre 0,35 et 0,6.

Cette utilisation d'homopolymères issus d'un procédé de polymérisation de l'acide maléique, est aussi caractérisée en ce que ledit procédé est conduit en l'absence de tout agent de décomposition de l'eau oxygénée en radicaux libres et de tout autre générateur de radicaux libres ainsi qu'en l'absence de tout persel ou tout autre agent de transfert.

Dans une première variante, cette utilisation d'homopolymères issus d'un procédé de polymérisation de l'acide maléique, est aussi caractérisée en ce que dans ledit procédé, toute la quantité nécessaire d'hypophosphite de sodium est introduite tout au long de la réaction de polymérisation dans le pied de cuve du réacteur ne contenant que de l'eau.

Dans une deuxième variante, cette utilisation d'homopolymères issus d'un procédé de polymérisation de l'anhydride maléique, est aussi caractérisée en ce que dans ledit procédé, tout ou partie de la quantité nécessaire d'hypophosphite de sodium est introduite avant le début de la polymérisation comme charge dans le pied de cuve du réacteur en présence éventuellement de tout ou partie de l'acide maléique à l'état acide ou éventuellement partiellement ou totalement neutralisés au moyen d'une solution basique et en ce que la réaction d'obtention des homopolymères se déroule sans ajout de métaux et / ou de sels métalliques initiant la décomposition de l'eau oxygénée.

Cette utilisation est aussi caractérisée en ce que lesdits homopolymères présentent un poids moléculaire, tel que mesuré par Chromatographie en Phase Gazeuse (GPC), compris entre 400 g/mole et 2 000 g/mole, préférentiellement entre 400 et 900 g/mole.

Cette utilisation d'homopolymères de l'acide maléique est aussi caractérisée en ce qu'elle est effectuée dans des formulations aqueuses choisies parmi des compositions détergentes et préférentiellement des lessives, et des compositions pour le traitement des eaux.

Les exemples qui vont suivre permettront de mieux comprendre l'invention, sans pour autant en limiter la portée.

### EXEMPLES

### Exemple 1

Cet exemple illustre l'utilisation de différents polymères en détergence, dont on a mesuré le pouvoir anti-tartre et le pouvoir anti-adhérence vis-à-vis du tartre précipité, dans une application type détergence.

Les polymères sont testés selon une procédure définie par la Demanderesse et basée sur le document publié en novembre 1999 par l'association des fabricants Allemands de détergents (IKW - Industriverband Körperpflege und Waschmittel e.V) intitulé « Methods for Ascertaining the cleaning performance of dishwasher detergents ». En page 1 du document sont listées des compositions moyennes de détergents utilisables pour le lavage de la vaisselle.

On choisit la composition détergente suivante :

| | |
|---|---|
| Méta silicate de sodium | 48,4 g. |
| Carbonate de sodium | 48,4 g. |
| Polymère à tester | 3,2 g. |

Plutôt que d'utiliser une eau naturelle, sujette à variations d'un jour sur l'autre, la Demanderesse utilise une eau synthétique dont la dureté est apportée par des sels de calcium et magnésium solubles et l'alcalinité par de l'hydrogénocarbonate de sodium.

Les solutions utilisées ont la composition suivante :

| Solution de sels de calcium et magnésium : | |
|---|---|
| Chlorure de calcium dihydraté | 6,62 g/l. |
| Chlorure de magnésium hexahydraté | 3,05 g/l. |

Solution d'hydrogénocarbonate de sodium :

| | |
|---|---|
| Hydrogénocarbonate de sodium | 0,6 g/l. |

Solution du mélange détergent contenant 12,5 % du mélange précité.

La préparation des essais est faite par pesée, dans des flacons en verre, soigneusement nettoyés et séchés au préalable de :

| | |
|---|---|
| Eau distillée | 425 g. |
| Solution de sels de calcium et magnésium | 25 g. |
| Solution du mélange détergent | 25 g. |
| Solution d'hydrogénocarbonate de sodium | 25 g. |

Les flacons, soigneusement homogénéisés sont fermés et placés dans un bain d'eau agité à raison de 100 allers et retours par minute et chauffé à 80°C. Après 2 heures de test, les flacons sont retirés du bain et laissés à refroidir à température ambiante.

Un échantillon d'eau est alors prélevé et passé sur un filtre de 0,45 micromètre afin d'éliminer les sels précipités. Un dosage de la dureté de cet échantillon filtré, par complexométrie à l'EDTA, permet de quantifier la masse de sels alcalino-terreux restant en solution et d'obtenir alors la masse de précipité formé lors du test.

Les flacons sont ensuite vidés puis délicatement rincés à l'eau distillée en prenant soin de ne pas éliminer mécaniquement le tartre adhérent sur les parois. Chaque flacon est alors décapé avec une solution d'acide nitrique à 2 %, la solution résultant du décapage étant soigneusement collectée et la dureté de cette solution mesurée par dosage complexométrique à l'EDTA. Cette opération permet de déterminer la masse de tartre adhérent qui s'est formé lors du test.

Les deux résultats obtenus permettent de quantifier :
- le pouvoir inhibiteur de précipitation des polymères testés, exprimé en masse de tartre formé,
- le pouvoir anti-adhérent des polymères testés, exprimé en masse de tartre ayant adhéré aux parois.

### Essai n° 1

Cet essai correspond à la référence c'est-à-dire à un essai sans polymère.

### Essai n° 2

Cet essai illustre un domaine hors invention et met en oeuvre un copolymère de l'acide acrylique et de l'acrylate d'éthyle, obtenu avec un système catalytique différent de celui de l'invention.

Dans un réacteur en verre de 2 litres équipé d'une agitation, d'un thermomètre et d'un système de refroidissement, on prépare à température ambiante une charge appelée pied de cuve et composée de 0,015 g de sulfate de fer et 176 g d'eau.

On ajoute en 2 heures à l'aide de pompes sur ce pied de cuve chauffé à 73°C :
- dans un premier bécher un mélange de 388 g d'acide acrylique, 35 g d'acrylate d'éthyle et 10 g d'eau,
- dans un deuxième bécher 3,43 g de persulfate de sodium dissous dans 36 g d'eau,
- dans un troisième bécher 179 g d'une solution à 40 % de bisulfite de sodium.

Le produit est encore cuit 1 heure à 70°C, puis neutralisé à la soude à pH = 7.

### Essai n° 3

Cet essai illustre un domaine hors invention et met en oeuvre un homopolymère de l'acide acrylique, obtenu avec un système catalytique différent de celui de l'invention.

Ce polymère est obtenu par synthèse dite de Fenton en mettant en oeuvre selon des procédés bien connus de l'homme de métier de l'acide acrylique, du peroxyde d'hydrogène, du sel de fer et des solvants.

Dans un réacteur en verre de 0,5 litre équipé d'une agitation, d'un thermomètre et d'un système de refroidissement, on prépare à température ambiante une charge appelée pied de cuve et composée de 0,27 g de sulfate de fer, 112 g d'alcool isopropylique et 0,5 g de sulfate d'hydroxyle amine.

On ajoute en 2 heures à l'aide de pompes sur ce pied de cuve chauffé à 81 °C :
- dans un premier bécher 244 g d'acide acrylique,
- dans un deuxième bécher 9 g de sulfate d'hydroxyle amine dissous dans 67 g d'eau,
- dans un troisième bécher 39 g d'une solution à 130 volumes d'eau oxygénée

Le produit est encore cuit 1 heure à 80°C.

L'isopropanol est distillé et remplacé en cours de distillation par de l'eau puis le polymère est neutralisé avec de la soude 50 % jusqu'à pH 7 pour une concentration de 48 %.

Sa masse moléculaire en poids est de 1 900 g/mole.

### Essai n° 4

Cet essai illustre un domaine hors invention et met en oeuvre un homopolymère de l'acide acrylique, obtenu avec un système catalytique différent de celui de l'invention et de celui mis en oeuvre dans l'essai n° 3.

Dans un réacteur en verre de 2 litres équipé d'une agitation, d'un thermomètre et d'un système de refroidissement, on prépare à température ambiante une charge appelée pied de cuve et composée de 0,11 g de sulfate de fer 0,015 g de sulfate de cuivre et 214 g d'eau.

On ajoute en 2 heures à l'aide de pompes sur ce pied de cuve chauffé à 95°C :
- dans un premier bécher 303 g d'acide acrylique,
- dans un deuxième bécher 26 g d'hypophosphite de sodium dissous dans 100 g d'eau,
- dans un troisième bécher 19 g d'eau oxygénée 130 volumes avec 35 g d'eau,

Le produit est encore cuit 1 heure à 95°C, puis neutralisé à la soude à pH = 7.

### Essai n° 5

Cet essai illustre un domaine hors invention et met en oeuvre un homopolymère de l'acide acrylique, obtenu avec un système catalytique différent de celui de l'invention et différent de ceux mis en oeuvre dans les essais n° 3 et 4.

Dans un réacteur en verre de 1 litre équipé d'une agitation, d'un thermomètre et d'un système de refroidissement, on prépare à température ambiante une charge appelée pied de cuve et composée de 0,011 g de sulfate de fer et 124 g d'eau.

On ajoute en 2 heures à l'aide de pompes sur ce pied de cuve chauffé à 80°C :
- dans un premier bécher un mélange de 270 g d'acide acrylique,
- dans un deuxième bécher 3,3 g de persulfate de sodium dissous dans 60 g d'eau,
- dans un troisième bécher 114 g de bisulfite de sodium à 40%.

Le produit est encore cuit 1 heure à 80°C puis neutralisé à la soude à pH = 7.

### Essai n° 6

Cet essai illustre un domaine hors invention et met en oeuvre un homopolymère de l'acide acrylique, obtenu avec un système catalytique selon l'invention et dans les conditions de l'invention.

Dans un réacteur en verre de 2 litres équipé d'une agitation, d'un thermomètre et d'un système de refroidissement, on prépare à température ambiante une charge appelée pied de cuve et composée de 144 g d'acide acrylique, 144 g de soude à 50 %, 82 g d'hypophosphite de sodium et 130 g d'eau. Pendant la montée en température du pied de cuve jusqu'à 90°C, on prépare une charge contenant 20 g d'eau oxygénée à 130 volumes et 100 g d'eau

Après 2 heures d'ajout de la charge dans le réacteur chauffé à 93°C on obtient un polymérisat en solution limpide et incolore.

Le produit obtenu est un produit limpide, incolore, de poids moléculaire égal 1 035 g/mole

Le ratio molaire hypophosphite/acide acrylique est 0,386.

### Essai n° 7

Cet essai illustre un domaine hors invention et met en oeuvre un homopolymère de l'anhydride maléique, obtenu avec un système catalytique différent de l'invention.

Ce polymère est selon le procédé dévoilé dans le brevet GB 1 411 1063

### Essai n° 8

Cet essai illustre un domaine hors invention et met en oeuvre de l'HEDP.

### Essai n° 9

Cet essai illustre un domaine hors invention.

Dans un réacteur en verre de 2 litres équipé d'une agitation, d'un thermomètre et d'un système de refroidissement, on prépare à température ambiante une charge appelée pied de cuve et composée de 98 g d'anhydride maléique, 144 g de soude à 50 %, 81,6 g d'hypophosphite de sodium et 106 g d'eau. Le ratio molaire hypophosphite de sodium /acide maléique est alors égal à 0,77.

Pendant la montée en température du pied de cuve jusqu'à ébullition, on prépare une charge contenant 20 g d'eau oxygénée à 130 volumes et 100 g d'eau.

Après 2 heures d'ajout de cette charge dans le réacteur chauffé à ébullition on obtient un polymérisat en solution limpide et incolore.

Le produit obtenu est un produit limpide, incolore, de masse moléculaire en poids égale à 560 g/mole.

### Essai n° 10

Cet essai illustre un domaine hors invention.

Dans un réacteur en verre de 2 litres équipé d'une agitation, d'un thermomètre et d'un système de refroidissement, on prépare à température ambiante une charge appelée pied de cuve et composée de 196 g d'anhydride maléique, 288 g de soude à 50 %, 60 g d'hypophosphite de sodium et 100 g d'eau. Le ratio molaire hypophosphite de sodium / acide maléique est alors égal à 0,28.

Pendant la montée en température du pied de cuve jusqu'à ébullition, on prépare une charge contenant 20 g d'eau oxygénée à 130 volumes et 100 g d'eau.

Après 2 heures d'ajout de cette charge dans le réacteur chauffé à ébullition on obtient un polymérisat en solution limpide et incolore.

Le produit obtenu est un produit limpide, incolore, de masse moléculaire en poids égale à 680 g/mole.

### Essai n° 11

Cet essai illustre un domaine hors invention.

Dans un réacteur en verre de 2 litres équipé d'une agitation, d'un thermomètre et d'un système de refroidissement, on prépare à température ambiante une charge appelée pied de cuve et composée de 110 g d'anhydride maléique, 144 g de soude à 50 %, 106 g d'hypophosphite de sodium et 106 g d'eau. Le ratio molaire hypophosphite de sodium / acide maléique est alors égal à 0,95.

Pendant la montée en température du pied de cuve jusqu'à ébullition, on prépare une charge contenant 20 g d'eau oxygénée à 130 volumes et 100 g d'eau.

Après 2 heures d'ajout de cette charge dans le réacteur chauffé à ébullition on obtient un polymérisat en solution limpide et incolore.

Le produit obtenu est un produit limpide, incolore, de masse moléculaire en poids égale à 445 g/mole.

### Essai n° 12

Cet essai illustre un domaine hors invention.

Dans un réacteur en verre de 2 litres équipé d'une agitation, d'un thermomètre et d'un système de refroidissement, on prépare à température ambiante une charge appelée pied de cuve et composée de 98 g d'anhydride maléique, 144 g de soude à 50 %, 81,6 g d'hypophosphite de sodium et 106 g d'eau, plus 0,015 g de sulfate de cuivre (CuSO₄ * 5 H₂0) et 0,107 g de sulfate de fer (FeSO₄ * 7 H₂O). Le ratio molaire hypophosphite de sodium / acide maléique est alors égal à 0,77.

Pendant la montée en température du pied de cuve jusqu'à ébullition, on prépare une charge contenant 20 g d'eau oxygénée à 130 volumes et 100 g d'eau.

Après 2 heures d'ajout de cette charge dans le réacteur chauffé à ébullition on obtient un polymérisat en solution limpide et incolore.

Le produit obtenu est un produit limpide, incolore, de masse moléculaire en poids égale à 465 g/mole.

### Essai n° 13

Cet essai illustre l'invention.

Dans un réacteur en verre de 2 litres équipé d'une agitation, d'un thermomètre et d'un système de refroidissement, on prépare à température ambiante une charge appelée pied de cuve et composée de 196 g d'anhydride maléique, 288 g de soude à 50 %, 126 g d'hypophosphite de sodium et 130 g d'eau. Le ratio molaire hypophosphite de sodium / acide maléique est alors égal à 0,59.

Pendant la montée en température du pied de cuve jusqu'à ébullition, on prépare une charge contenant 20 g d'eau oxygénée à 130 volumes et 100 g d'eau.

Après 2 heures d'ajout de cette charge dans le réacteur chauffé à ébullition on obtient un polymérisat en solution limpide et incolore.

Le produit obtenu est un produit limpide, incolore, de masse moléculaire en poids égale à 610 g/mole.

### Essai n° 14

Cet essai illustre l'invention.

Dans un réacteur en verre de 2 litres équipé d'une agitation, d'un thermomètre et d'un système de refroidissement, on prépare à température ambiante une charge appelée pied de cuve et composée de 196 g d'anhydride maléique, 288 g de soude à 50 %, 106 g d'hypophosphite de sodium et 130 g d'eau. Le ratio molaire hypophosphite de sodium / acide maléique est alors égal à 0,50.

Pendant la montée en température du pied de cuve jusqu'à ébullition, on prépare une charge contenant 20 g d'eau oxygénée à 130 volumes et 100 g d'eau.

Après 2 heures d'ajout de cette charge dans le réacteur chauffé à ébullition on obtient un polymérisat en solution limpide et incolore.

Le produit obtenu est un produit limpide, incolore, de masse moléculaire en poids égale à 640 g/mole.

### Essai n° 15

Cet essai illustre l'invention.

Dans un réacteur en verre de 2 litres équipé d'une agitation, d'un thermomètre et d'un système de refroidissement, on prépare à température ambiante une charge appelée pied de cuve et composée de 200 g d'anhydride maléique, 186,3 g de soude à 50 %, 82,5 g d'hypophosphite de sodium et 328,7 g d'eau. Le ratio molaire hypophosphite de sodium / acide maléique est alors égal à 0,38.

Pendant la montée en température du pied de cuve jusqu'à ébullition, on prépare une charge contenant 29,2 g d'eau oxygénée à 130 volumes et 42,8 g d'eau.

Après 2 heures d'ajout de cette charge dans le réacteur chauffé à ébullition et rinçage de la pompe, on obtient un polymérisat en solution limpide et incolore.

Le produit obtenu est un produit limpide, incolore, de poids moléculaire égal 715 g/mole.

Pour chacun des essais précédents, on s'intéresse dans un premier temps à l'efficacité anti-tartre. Dans le tableau 1, on a classé ces essais par ordre décroissant d'efficacité anti-tartre, c'est-à-dire par valeur décroissante de masse de tartre formé.

**Tableau 1**

| Essai n° | Hors Invention INvention | nature | Catalyseur INvention/ Hors Invention | Ratio molaire | Masse tartre (mg) |
|---|---|---|---|---|---|
| 8 | HI | HEDP | - | - | 111 |
| 14 | IN | homo M | IN | 0,5 | 114 |
| 10 | HI | homo M | IN | 0,28 | 114 |
| 11 | HI | homo M | IN | 0,95 | 114 |
| 15 | IN | homo M | IN | 0,38 | 116 |
| 13 | IN | homo M | IN | 0,59 | 117 |
| 12 | HI | homo M | IN | 0,77 | 117 |
| 9 | HI | homo M | IN | 0,77 | 118 |
| | | | | | |
| 6 | HI | homo AA | IN | - | 120 |
| 7 | HI | homo M | HI | - | 135 |
| 5 | HI | homo AA | HI | - | 132 |
| 4 | HI | homo AA | HI | - | 132 |
| 3 | HI | homo AA | HI | - | 132 |
| 2 | HI | copo AA/AE | HI | - | 134 |
| 1 | HI | - | - | - | 146 |

homo M signifie : homopolymère de l'acide maléique
homo AA signifie : homopolymère de l'acide acrylique
copo AA/AE signifie : copolymère de l'acide acrylique et de l'acrylate d'éthyle ratio molaire signifie : ratio molaire entre l'hypophosphite de sodium et l'acide maléique

On distingue alors 2 groupes :
- le groupe 1 des homopolymères de l'invention qui conduisent à une efficacité anti-tartre importante : la masse de tartre est inférieure à 120 mg ;
- le groupe 2 des polymères de l'acide acrylique et de l'acide maléique de l'art antérieur, qui conduisent à une action anti-tartre modérée : la masse de tartre formé est supérieure à 120 mg.

C'est donc le double choix d'homopolymères de l'anhydride maléique et du système catalytique particulier de l'invention dans un ratio très précis, qui conduit à de tels résultats.

On remarquera notamment que :
- un homopolymère de l'acide maléique fabriqué avec un autre système catalytique est moins performant (essai n° 7) ;
- un homopolymère de l'acide acrylique fabriqué avec un système catalytique et un ratio identiques à ceux de l'invention est également moins performant (essai n° 6).

L'HEDP reste le produit le plus performant, mais ne peut satisfaire l'homme du métier de part sa concentration trop élevée en phosphore (qui représente 30 % de sa masse).

Dans un deuxième temps, on a cherché à discriminer, parmi les produits du groupe 2 qui présentent une efficacité anti-tartre quasiment identique, ceux qui étaient les plus efficaces en terme de pouvoir anti-adhérence. Dans le tableau 2, on a classé les essais correspondants par ordre décroissant d'efficacité anti-adhérence, c'est-à-dire par masse décroissante de tartre ayant adhéré aux parois, tout en indiquant le résultat obtenu pour l'HEDP.

**Tableau 2**

| Essai n° | Hors Invention INvention | Nature | Catalyseur INvention/ Hors Invention | Ratio molaire | Masse tartre adhérent (mg) |
|---|---|---|---|---|---|
| 15 | IN | homo M | IN | 0,38 | 19 |
| 14 | IN | homo M | IN | 0,50 | 22 |
| 13 | IN | homo M | IN | 0,59 | 25 |
| | | | | | |
| 8 | HI | HEDP | - | - | 32 |
| | | | | | |
| 12 | IN | homo M | HI | 0,77 | 41 |
| 11 | IN | homo M | HI | 0,98 | 44 |
| 10 | IN | homo M | HI | 0,28 | 46 |
| 9 | IN | homo M | HI | 0,77 | 49 |

Il apparaît alors clairement que les essais correspondants à la variante préférentielle de l'invention (0,35-0,6 pour le ratio molaire entre l'hypophosphite de sodium et l'acide maléique) conduisent à de bien meilleurs résultats : non seulement par rapport aux autres polymères de l'invention mais aussi, par rapport à l'HEDP.

### Exemple 2

Cet exemple illustre l'utilisation de différents polymères en détergence, dont on a mesuré le pouvoir anti-tartre et le pouvoir anti-adhérence vis-à-vis du tartre précipité, dans une application type traitement de l'eau.

Les polymères sont testés selon une procédure définie par la Demanderesse et qui met en oeuvre une eau naturelle ayant les caractéristiques suivantes :
- dureté calco-magnésienne = 420 ppm en équivalents carbonate de calcium ;
- alcalinité = 290 ppm en équivalents carbonate de calcium.

Cette eau naturelle est additivée de 2 ppm actifs des polymères et additifs testés puis stockée dans des flacons en verre fermés hermétiquement et placés dans un bain d'eau agité à une température de 80 degrés pendant 60 heures. Passé ce délai, les flacons sont retirés du bain et laissés à refroidir à température ambiante.

Un échantillon d'eau est alors prélevé et passé sur un filtre de 0,45 micromètre afin d'éliminer les sels précipités. Un dosage de la dureté de cet échantillon filtré, par complexométrie à l'EDTA, permet de quantifier le pourcentage de sels alcalino-terreux restant en solution et par la même le pourcentage de précipité formé lors du test.

Les flacons sont alors vidés puis délicatement rincés à l'eau distillée en prenant soin de ne pas éliminer mécaniquement le tartre adhérent sur les parois. Chaque flacon est alors décapé avec une solution d'acide nitrique à 2 %, la solution résultant du décapage étant soigneusement collectée et la dureté de cette solution mesurée par dosage complexométrique à l'EDTA. Cette opération permet de déterminer la quantité de tartre adhérent qui s'est formé lors du test.

Les deux résultats obtenus permettent de quantifier :
- le pouvoir inhibiteur de précipitation des polymères testés, exprimé à travers la masse de tartre formé ;
- le pouvoir anti-adhérent des polymères mesuré à partir de la masse de tartre ayant adhéré aux parois.

Dans cet exemple, seul l'HEDP a été testé pour l'art antérieur, en tant que référence du marché.

Pour l'invention n'ont été testés que les polymères correspondant à la variante préférentielle, c'est-à-dire aux produits qui ont été mis en oeuvre dans les essais n° 13, 14 et 15 de l'exemple précédent.

Les résultats figurent dans le tableau 3, les polymères portant le même numéro d'essai que dans l'exemple précédent.

**Tableau 3**

| Essai n° | Hors Invention INvention | Nature | Catalyseur INvention/ Hors Invention | Ratio molaire | Masse tartre (mg) | Masse tartre adhérent (mg) |
|---|---|---|---|---|---|---|
| 15 | IN | homo M | IN | 0,38 | 3,5 | 2,0 |
| 13 | IN | homo M | IN | 0,59 | 3,5 | 2,1 |
| 14 | IN | homo M | IN | 0,50 | 4,4 | 2,5 |
| 8 | HI | HEDP | - | - | 4,6 | 2,7 |
| blanc | HI | - | - | - | 50,5 | 31,5 |

Ces résultats démontrent la supériorité des polymères selon l'invention, et l'intérêt de sélectionner l'intervalle 0,35-0,6 pour le ratio molaire entre l'hypophosphite de sodium et l'acide maléique.

## Revendications

1. Utilisation, comme agent ayant la double fonction anti-tartre et anti-adhérence, d'homopolymères **caractérisés en ce qu'**ils sont issus d'un procédé de polymérisation de l'acide maléique mettant en oeuvre comme système catalylique de l'eau oxygénée et de l'hypophosphite de sodium, où le ratio molaire hypophosphite de sodium / acide maléique est compris entre 0,35 et 0,6.

2. Utilisation selon la revendication 1, d'homopolymères issus d'un procédé de polymérisation de l'acide maléique, **caractérisée en ce que** ledit procédé est conduit en l'absence de tout agent de décomposition de l'eau oxygénée en radicaux libres et de tout autre générateur de radicaux libres ainsi qu'en l'absence de tout persel ou tout autre agent de transfert.

3. Utilisation selon la revendication 2, d'homopolymères issus d'un procédé de polymérisation de l'acide maléique, **caractérisée en ce que** dans ledit procédé, toute la quantité nécessaire d'hypophosphite de sodium est introduite tout au long de la réaction de polymérisation dans le pied de cuve du réacteur ne contenant que de l'eau.

4. Utilisation selon la revendication 2, d'homopolymères issus d'un procédé de polymérisation de l'acide maléique, **caractérisée en ce que** dans ledit procédé, tout ou partie de la quantité nécessaire d'hypophosphite de sodium est introduite avant le début de la polymérisation comme charge dans le pied de cuve du réacteur en présence éventuellement de tout ou partie de l'acide maléique à l'état acide ou éventuellement partiellement ou totalement neutralisés au moyen d'une solution basique et **en ce que** la réaction d'obtention des homopolymères se déroule sans ajout de métaux et / ou de sels métalliques initiant la décomposition de l'eau oxygénée.

5. Utilisation selon l'une des revendications 1 à 4, d'homopolymères issus d'un procédé de polymérisation de l'acide maléique, **caractérisée en ce que** lesdits homopolymères présentent un poids moléculaire, tel que mesuré par Chromatographie en Phase Gazeuse (GPC), compris entre 400 g/mole et 2 000 g/mole, préférentiellement entre 400 et 900 g/mole.

6. Utilisation selon l'une des revendications 1 à 5, **caractérisée en ce qu'**elle est effectuée dans des formulations aqueuses choisies parmi des compositions détergentes et préférentiellement des lessives, et des compositions pour le traitement des eaux.

## Claims

1. Use, as an agent having a dual scale-prevention and sticking-prevention function, of homopolymers **characterized in that** they are derived from a method of polymerizing maleic acid using as a catalytic system oxygenated water and sodium hypophosphite, in which the molar ratio of sodium hypophosphite/maleic acid is between 0.35 and 0.6.

2. Use according to claim 1, of homopolymers derived from a method of polymerizing maleic acid, **characterized in that** said method is conducted in the absence of any agent for breaking the oxygenated water down into free radicals and any other generator of free radicals, as well as in the absence of any peroxysalts or other transfer agents.

3. Use according to claim 2, of homopolymers derived from a method of polymerizing maleic acid, **characterized in that** within said method, the entire necessary quantity of sodium hypophosphite is added throughout the polymerization reaction in the starter of the reactor, which contains only water.

4. Use according to claim 2, of homopolymers derived from a method of polymerizing maleic acid, **characterized in that** within said method, all or some of the necessary quantity of sodium hypophosphite is added before beginning the polymerization, as a load in the starter of the reactor, potentially in the presence of all or some of the maleic acid, either in an acidic state or potentially partially or fully neutralized using a base solution, and **in that** the reaction of obtaining homopolymers takes place without adding metals and/or metallic salts that would initiate the breakdown of the oxygenated water.

5. Use according to one of the claims 1 to 4 of homopolymers derived from a method of polymerizing maleic acid, **characterized in that** said homopolymers have a molecular weight, as measured by Gas Phase Chromatography (GPC), of between 400 g/mole and 2000 g/mole, preferentially between 400 and 900 g/mole.

6. Use according to one of the claims 1 to 5, **characterized in that** it is carried out within aqueous formulations chosen from among detergent compositions and preferentially dishwasher detergents, and compositions for water treatment.

## Patentansprüche

1. Verwendung von Homopolymeren als Mittel mit doppelter Wirkung gegen Kalkablagerungen und gegen Anhaften, wobei diese **dadurch gekennzeichnet sind, dass** sie aus einem Verfahren zur Polymerisation von Maleinsäure stammen, bei welchem Wasserstoffperoxid und Natriumhypophosphit als katalytisches System eingesetzt werden, wobei das Molverhältnis von Natriumhypophosphit / Maleinsäure im Bereich von 0,35 bis 0,6 liegt.

2. Verwendung nach Anspruch 1, von Homopolymeren, die aus einem Verfahren zur Polymerisation von Maleinsäure stammen, **dadurch gekennzeichnet, dass** das Verfahren ohne jegliches Mittel zur Zersetzung des Wasserstoffperoxids in freie Radikale und jeglichen weiteren Radikalerzeuger sowie ohne jegliche salzartige Perverbindung oder jegliches weitere Kettenübertragungsmittel durchgeführt wird.

3. Verwendung nach Anspruch 2, von Homopolymeren, die aus einem Verfahren zur Polymerisation von Maleinsäure stammen, **dadurch gekennzeichnet, dass** bei dem Verfahren die gesamte erforderliche Menge an Natriumhypophosphit über die gesamte Polymerisationsreaktion hinweg im Bodenbereich des Reaktors zugesetzt wird, welcher nur Wasser enthält.

4. Verwendung nach Anspruch 2, von Homopolymeren, die aus einem Verfahren zur Polymerisation von Maleinsäure stammen, **dadurch gekennzeichnet, dass** bei dem Verfahren die erforderliche Menge an Natriumhypophosphit vollständig oder teilweise vor dem Beginn der Polymerisation im Bodenbereich des Reaktors als Charge zugesetzt wird, möglicherweise in Gegenwart eines Teils oder der Gesamtheit der Maleinsäure, welche in Säureform vorliegt oder teilweise oder vollständig mittels einer basischen Lösung neutralisiert wurde, und dadurch, dass die Reaktion, bei welcher die Homopolymere erhalten werden, ohne Zusatz von Metallen und/oder Metallsalzen, welche die Zersetzung des Wasserstoffperoxids einleiten, abläuft.

5. Verwendung nach einem der Ansprüche 1 bis 4, von Homopolymeren, die aus einem Verfahren zur Polymerisation von Maleinsäure stammen, **dadurch gekennzeichnet, dass** die Homopolymere ein Molekulargewicht aufweisen, das gemäß einer Messung mittels Gaschromatographie (GC) im Bereich von 400 g/mol bis 2.000 g/mol, vorzugsweise von 400 bis 900 g/mol, liegt.

6. Verwendung nach einem der Ansprüche 1 bis 5, **dadurch gekennzeichnet, dass** sie in wässrigen Formulierungen erfolgt, die aus den reinigenden Zusammensetzungen und vorzugsweise den Waschmitteln sowie den Zusammensetzungen zur Wasseraufbereitung ausgewählt sind.
